# FASCICULE DE BREVET EUROPEEN

(11) **EP 0 634 986 B1**
(45) Date de publication et mention de la délivrance du brevet: **09.12.1998**
(21) Numéro de dépôt: 94906243.4
(22) Date de dépôt: 03.02.1994
(51) Int. Cl.: B65G 17/00, B65G 17/38

(54) **SYSTEME DE CONVOYAGE EN TRANSLATION/ROTATION D'UN ELEMENT SUPPORT**
TRANSLATIONS/ROTATIONS-FÖRDERSYSTEM FÜR TRAGELEMENT
TRANSLATIONAL/ROTATIONAL SUPPORT MEMBER CONVEYING SYSTEM

(30) Priorité: 04.02.1993 FR 9301227
(43) Date de publication de la demande: 25.01.1995
(73) Titulaire: THE WHITAKER CORPORATION, Wilmington, Delaware 19808 (US)
(72) Inventeur: SORIANO, Louis, F-13400 Aubagne (FR); ORANGE, Jackie, F-13012 Marseille (FR)
(74) Mandataire: Reuteler, Raymond Werner
(86) Numéro de dépôt international: FR9400132
(87) Numéro de publication internationale: WO9418102

(56) Documents cités:
- GB-A- 2 214 479
- PATENT ABSTRACTS OF JAPAN vol. 11, no. 255 (M-617)(2702) 19 Aoüt 1987 & JP,A,62 060 708 (MITSUBISHI ELECTRIC CORP) 17 Mars 1987

## Description

La présente invention est relative à un système de convoyage en translation/rotation d'un élément support.

Les systèmes de convoyage actuels, lorsque ceux-ci sont utilisés dans les machines automatiques de traitement multipostes, nécessitent une part de plus en plus importante de facilité de mise en oeuvre et de précision de déplacement d'un ou plusieurs éléments supports successifs. Dans la technique des ateliers flexibles de câblage linéaire, il est indispensable, outre la précision de déplacement nécessaire précitée, qu'une grande souplesse d'utilisation puisse être obtenue, notamment en ce qui concerne le recyclage des supports après un cycle de traitement ou de fabrication.

Parmi les techniques connues pour la réalisation de tels systèmes de convoyage, on a proposé de réaliser ces derniers par association de bandes transporteuses, munies de systèmes de plots, les supports pouvant être engagés par glissement dans les plots précités puis entraînés par ces derniers, confer en particulier demande de brevet européen EP-A-305 307. Dans ce type de mode de réalisation, toutefois, la fixation des supports à la bande transporteuse ne peut ni ne doit être ferme, dans le but notamment de permettre le recyclage des supports après un cycle d'utilisation. Pour cette raison, en l'absence d'un caractère de fermeté de cette fixation, le recyclage ne peut être envisagé qu'au moyen de convoyeurs situés selon une configuration dans un même plan, plan horizontal, par translations successives. De telles installations ne présentent donc pas une grande souplesse de mise en oeuvre, en raison de l'encombrement au sol inévitable de ce type de configuration, confer demande de brevet allemand DE-3 327 583.

Par la demande de brevet japonais JP-A-62 60 708 on a également proposé un système de convoyage en translation/rotation d'un élément support comportant deux flasques en vis-à-vis, chaque flasque étant muni de rainures de guidage en vis-à-vis rectilignes ou circulaires, et une courroie crantée se déplaçant en translation et/ou en rotation au voisinage àes rainures de guidage. Un ou plusieurs éléments supports dont la base comporte des dents engagées dans les rainures de guidage et les crans de la courroie crantée sont entraînés et guidés en translation et/ou en rotation. Toutefois, l'engagement des dents des supports dans les crans de la courroie crantée n'est pas total et un recouvrement partiel et un espacement entre dent de support et cran ou redan de la courroie crantée sont ménagés pour tenir compte de l'allongement de la courroie crantée lors de la mise en rotation de celle-ci, ce qui a pour conséquence une variation de positionnement de chaque support, lors de la mise en rotation de ces derniers. En outre, les dents d'entraînement et les dents de guidage sur chaque support sont distinctes et séparées par une distance importante par rapport à la dimension du support, ce qui a pour effet de soumettre chaque support à un couple de rotation proportionnel à cette distance, notamment lors du passage d'un entraînement en translation à un entraînement en rotation ou réciproquement, avec des risques d'à-coups et de vibrations aux vitesses d'entraînement élevées.

Un tel dispositif ne permet donc pas un positionnement parfaitement stable des supports sur la courroie crantée, ce qui a pour conséquence une limitation des vitesses d'entraînement en translation/rotation en raison des risques non négligeables de vibrations de l'ensemble.

La présente invention a pour but de remédier aux inconvénients précités par la mise en oeuvre d'un système de convoyage, à caractère modulaire, dans lequel les éléments supports, bien que non fermement solidaires d'une bande d'entraînement, peuvent être déplacés en translation et/ou en rotation, quelle que soit l'orientation de chaque élément support par rapport à la bande d'entraînement.

Un autre objet de la présente invention est, en outre, la mise en oeuvre d'un système de convoyage, à caractère modulaire, dans lequel la configuration de l'ensemble des modules, formé par un ou plusieurs convoyeurs élémentaires, peut être réalisée dans un plan d'orientation, notamment verticale, ce qui permet de réduire sensiblement l'encombrement au sol d'un tel type de système de convoyage.

Le système de convoyage en translation/rotation d'un élément support, objet de la présente invention, est remarquable en ce qu'il comporte au moins un convoyeur élémentaire formé, d'une part, par deux flasques en vis-à-vis, chaque flasque étant muni de rainures de guidage en vis-à-vis rectilignes et/ou circulaires et par une courroie crantée se déplaçant en translation et/ou en rotation au voisinage des rainures de guidage, et, d'autre part, par un ou plusieurs éléments supports dont la base comporte au moins deux tenons engagés dans les rainures de guidage et dans les crans de la courroie crantée, ce qui permet d'assurer d'une part l'entraînement et d'autre part le guidage en translation/rotation du ou desdits éléments supports.

Le système de convoyage en translation/rotation d'un élément support objet de l'invention trouve application à la réalisation d'automates ou ateliers automatiques de câblerie ou, de manière plus générale, de machines transfert.

Une description plus détaillée d'un système de convoyage en translation/rotation d'éléments supports conforme à l'objet de l'invention sera donnée ci-après en liaison avec les dessins dans lesquels,
- la figure 1a représente, en perspective, une vue d'un convoyeur élémentaire permettant la réalisation d'un système de convoyage conformément à l'objet de la présente invention,
- la figure 1b représente une vue en coupe selon un plan de symétrie longitudinale du convoyeur élémentaire représenté en figure 1a,
- la figure 2a représente, en coupe, une variante de réalisation d'un système de convoyage conforme à l'objet de la présente invention dans lequel deux convoyeurs élémentaires selon l'invention sont alignés bout à bout,
- la figure 2b représente en coupe une variante de réalisation d'un système de convoyage conforme à l'objet de la présente invention selon la figure 2a mais dans lequel un module interface a été intercalé entre les deux convoyeurs élémentaires unis bout à bout,
- la figure 3a représente une vue en perspective d'un élément support particulièrement avantageux destiné à équiper un système de convoyage conforme à l'objet de la présente invention,
- la figure 3b représente une vue de face de la figure 3a dans laquelle le profil des tenons et dents de l'élément support ont été mis en évidence,
- la figure 3c représente trois étapes successives de l'entraînement en translation/rotation de l'élément support représenté en figure 3a, 3b et en particulier des ' tenons de celui-ci,
- la figure 4a représente une variante de réalisation particulièrement avantageuse du système de convoyage des figures 1b et 2b dans lequel un système d'aiguillage a été prévu,
- la figure 4b représente une variante de réalisation de la figure 4a, dans laquelle des rainures de guidage de dérivation étant prévues au sommet des rainures de guidage circulaires, un système d'aiguillage permet de réaliser une rotation de défilement à 90°,
- la figure 5 représente dans un plan vertical une configuration polygonale quelconque susceptible d'être mise en oeuvre grâce à l'utilisation d'une pluralité de convoyeurs élémentaires respectivement de modules d'interfaçage conformes à l'objet de la présente invention.

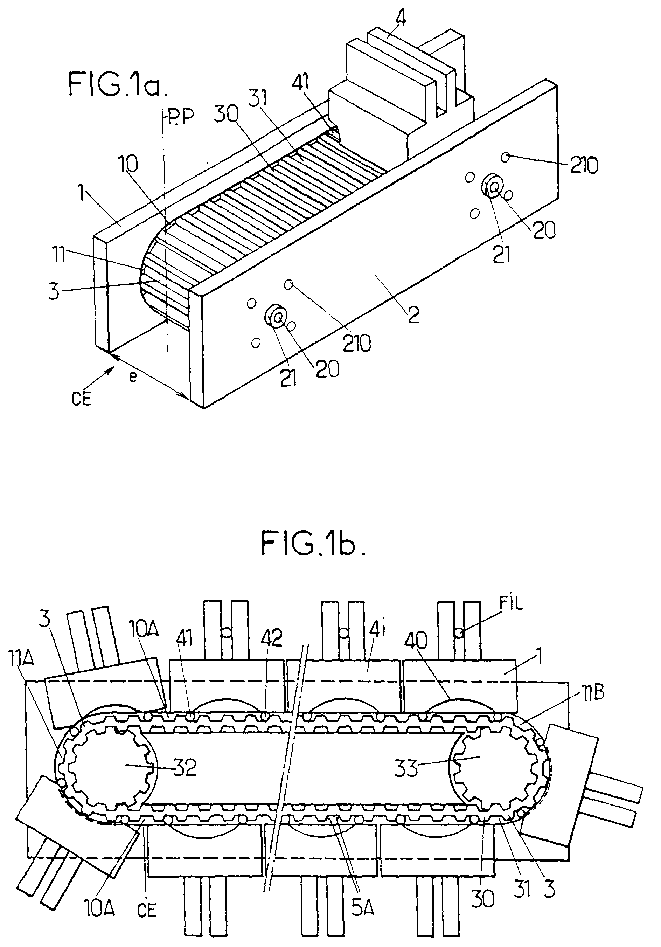

Le système de convoyage en translation/rotation d'un élément support conforme à l'objet de la présente invention sera maintenant décrit avec les figures 1a et 1b.

Ainsi qu'on l'observera sur la figure 1a, le système de convoyage selon l'invention comprend un convoyeur élémentaire noté CE formé, d'une part, par deux flasques en vis-à-vis notés chacun 1, respectivement 2, chaque flasque étant muni de rainures de guidage en vis-à-vis. Ces rainures référencées 10 peuvent être rectilignes et/ou circulaires, ces dernières portant la référence 11. Le convoyeur élémentaire CE comporte en outre une courroie crantée 3 se déplaçant en translation et/ou en rotation au voisinage des rainures de guidage 10 et 11 précitées, la courroie crantée 3 suivant, grâce à un jeu de poulies, lequel sera décrit ultérieurement dans la description, le chemin défini par les rainures de guidage.

Ainsi qu'on l'observera en outre sur la figure 1a, le convoyeur élémentaire CE comporte, d'autre part, un ou plusieurs éléments supports, notés 4, dont la base comporte au moins deux tenons, notés 41, engagés dans les rainures de guidage 10, respectivement 11, et dans les crans 30, 31 de la courroie crantée 3. On indique à ce titre que la courroie crantée 3 est formée par une succession de crans ou créneaux 30 suivis de redans 31.

Chaque élément support 4 étant ainsi engagé, d'une part, dans les rainures de guidage et, d'autre part, dans les crans de la courroie crantée 3, ce mode opératoire permet d'assurer non seulement l'entraînement mais également le guidage en translation/rotation de tout élément support 4 ainsi agencé. On comprend bien sûr que sur la figure la on a représenté un seul élément support 4 afin de ne pas surcharger les dessins.

On indique, d'autre part, que la courroie crantée 3 peut être avantageusement mise en mouvement de translation/rotation par l'intermédiaire de poulies d'entraînement dont l'axe d'entraînement, noté 20, peut être formé par un axe traversant les flasques 1, respectivement 2. A ce titre, et de manière avantageuse non limitative, des éléments supports 21 et de fixation 210 peuvent être prévus sur chaque flasque 1, respectivement 2, de façon à permettre la fixation d'un moteur d'entraînement lequel peut avantageusement être constitué par un moteur pas à pas. Ce moteur n'est pas représenté au dessin.

D'une manière plus générale, on comprend que le moteur d'entraînement précité peut alors être commandé selon les techniques classiques de commande des moteurs pas à pas.

Sur la figure 1b, on a représenté une coupe de la figure la selon le plan PP de symétrie longitudinale du convoyeur élémentaire CE.

Dans un mode de réalisation non limitatif tel que représenté en figure 1b, chaque flasque 1, respectivement 2 comporte au moins deux rainures rectilignes parallèles, notées 10A, respectivement 10B, ces rainures rectilignes parallèles étant reliées entre elles à leur extrémité par une rainure circulaire 11A, 11B. Dans le mode de réalisation non limitative représenté en figure 1b, l'ensemble des rainures rectilignes et circulaires forment ainsi une rainure de guidage unique en circuit fermé.

Sur la même figure 1b, on indique que les poulies d'entraînement portent les références 32 et 33. La courroie crantée 3 peut alors être réalisée par une courroie à double crantage sur chacune des faces de celle-ci, l'entraînement étant assuré par la face inférieure de la courroie crantée par l'intermédiaire de roues dentées solidaires des poulies précitées.

Sur la figure 1b, on a représenté une pluralité d'éléments supports 4, l'élément support courant portant la référence 4i. On indique que le nombre d'élément support 4i peut être quelconque pour un convoyeur élémentaire CE donné et n'est limité que par l'encombrement relatif de chaque élément support 4i mis bout à bout.

On indique que chaque élément support 4i peut être formé par une base monolithique à la superstructure de laquelle peut être associé tout élément de préhension et de maintien d'objet à transporter, tel que un ou plusieurs fils électriques, dans le cas où le système de convoyage objet de la présente invention est appliqué à la réalisation d'ateliers flexibles de câblerie linéaire. Pour une description plus détaillée de ce type d'élément de préhension ou de pince, on pourra se reporter utilement à la demande de brevet européen EP-88 430 017 précitée dont la demanderesse est titulaire.

Selon un mode de réalisation non limitatif représenté également en figure 1b, la base des éléments supports 4i peut comporter au moins deux tenons, notés 41, 42, engagés dans les rainures de guidage des flasques 1 et 2 précités.

Selon le même mode de réalisation précédemment mentionné, la base de chaque élément support 4i comporte en outre des dents engagées dans les crans 30, 31 de la courroie crantée, en particulier dans les redans 31 de celle-ci.

On comprend que, d'une manière avantageuse, le profil des dents permet un contact continu entre les parois des dents et les parois des crans 30, 31 de la courroie crantée 3, quel que soit le mouvement de translation et/ou de rotation imprimé au support 4i par la courroie crantée 3.

Dans un mode de réalisation non limitatif tel que représenté en figure 1b, on comprend que les tenons et les dents sont constitués par exemple par un élément cylindrique rapporté sur la face inférieure de la base de chaque élément support 4i. Cet élément cylindrique présente une longueur supérieure à l'écartement e séparant les deux flasques 1 et 2 en vis-à-vis, de façon à permettre l'insertion de l'extrémité des éléments cylindriques précités dans les rainures de guidage en vis-à-vis de chaque flasque ,ainsi que représenté en figure 1a et 1b. En outre, chaque élément cylindrique est également engagé dans un redan 31 de la courroie crantée, ainsi que représenté sur la figure 1b. La face inférieure de la base de chaque élément support 4i peut alors comporter une surface concave cylindrique, notée 40, laquelle présentant un rayon de courbure sensiblement égal à celui de la courroie crantée entraînée par la poulie 32 ou 33 permet, ainsi que représenté en figure 1b, d'assurer la libre rotation de l'élément support courant autour de la poulie considérée.

Bien entendu, l'écartement entre les éléments cylindriques 41 ou 42 constitutif de chaque tenon et de chaque dent est déterminé en fonction du pas des crans de la courroie crantée 3.

Selon une caractéristique avantageuse d'un système de convoyage objet de la présente invention tel que représenté en figure 1b, pour une courroie crantée 3 entraînée en translation/rotation au moyen d'au moins une poulie motrice 32 ou 33, chaque élément support 4i, lors de la transition translation/rotation d'entraînement par la courroie crantée 3, présente un centre instantané de rotation, passant progressivement d'un point situé à l'infini à un point coïncidant avec le centre de guidage circulaire, soit le centre de rotation de la poulie 32, 33 et de la courroie crantée 3. Une telle mesure permet d'assurer le passage du mouvement d'entraînement en translation de chaque élément support 4i à un mouvement d'entraînement en rotation, ainsi que représenté en figure 1b, avec un minimum d'à-coups imprimés à l'élément support 4i considéré. On indique que les à-coups précités pouvant être engendrés du fait de l'étirement inévitable de la face externe de la courroie crantée lorsque celle-ci passe d'un entraînement en translation en un entraînement en rotation au droit de la poulie, dans le cas où les éléments supports 4i seraient liés rigidement à la courroie crantée 3, ces à-coups sont au contraire évités en raison du fait que, en l'absence de liaison rigide, le calage de l'élément support considéré 4i est simplement modifié progressivement avec la suppression des risques d'à-coups correspondants.

D'un point de vue pratique, on indique que chaque flasque 1, 2 peut être formé par une plaque métallique en alliage d'aluminium par exemple, dans l'épaisseur de laquelle la ou les rainures de guidage 10a, 10b, 11a et 11b par exemple sont formées par usinage. A titre d'exemple non limitatif, on indique que les rainures peuvent être remplacées par des glissières rapportées sur les flasques.

On indique également que la base de chaque élément support 4i peut être formée en un matériau plastique autolubrifiant tel que le polytétrafluoréthylène par exemple.

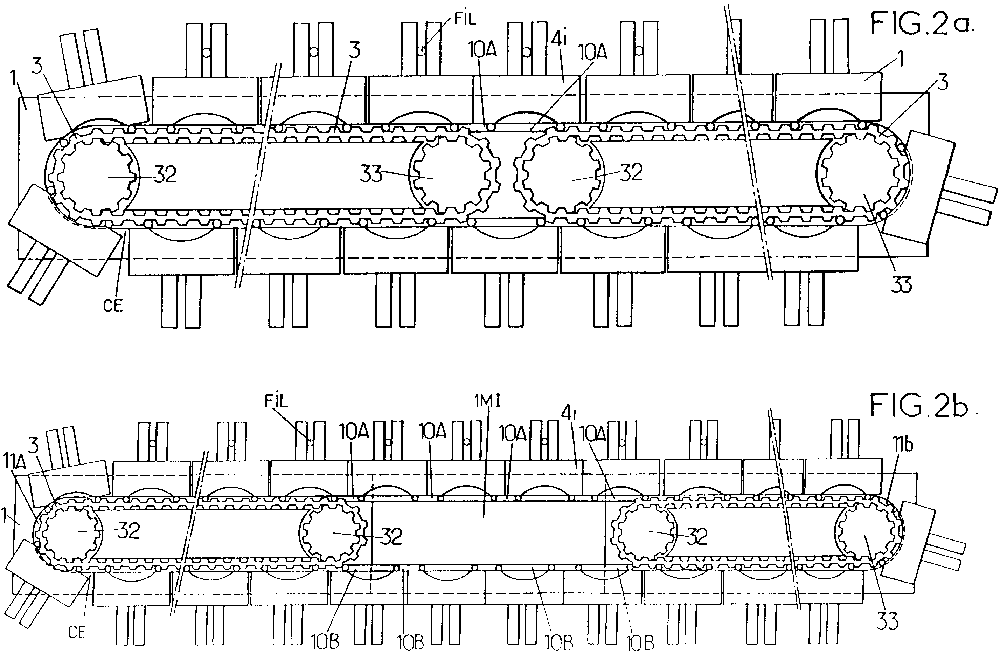

Différents modes de réalisation d'un convoyeur élémentaire CE, permettant la mise en oeuvre d'un système de convoyage conforme à l'objet de la présente invention, seront maintenant décrits en liaison avec les figures 2a et 2b.

Ainsi qu'on l'observera sur la figure 2a, un convoyeur élémentaire CE peut comporter au moins deux flasques 1, 2 en vis-à-vis munis de deux rainures de guidage rectilignes parallèles reliées à une de leur extrémité par une rainure de guidage circulaire, les rainures de guidage parallèles étant cependant ouvertes à leur autre extrémité.

Ainsi que représenté sur la figure 2a, les deux convoyeurs élémentaires CE peuvent alors être mis bout à bout au niveau des extrémités ouvertes de leur ligne de guidage rectiligne, ce qui permet bien entendu d'obtenir un système de convoyage conforme à l'objet de la présente invention, formé par deux convoyeurs élémentaires CE. On indique à ce titre que la zone de raccordement des deux convoyeurs élémentaires CE peut être de longueur sensiblement quelconque, chaque élément support 4i courant dans une telle zone de raccordement, en l'absence d'entraînement par une courroie crantée, étant alors cependant entraîné en translation par les éléments supports successifs, airsi que représenté sur la figure 2a précitée.

Il est ainsi possible, ainsi que représenté en figure 2b, d'augmenter de manière significative la longueur de transfert du système de convoyage objet de la présente invention, en prévoyant, ainsi que représenté sur la figure précitée, un module d'interfaçage, noté MI, lequel peut par exemple être formé simplement par deux flasques en vis-à-vis noté 1 MI, respectivement 2 MI, et dans lesquels des rainures de guidage ont été ménagées. On indique bien sûr que l'entraînement en translation de chaque élément support engagé dans les rainures de guidage du module d'interfaçage MI est alors assuré par poussée par les éléments supports successifs ultérieurs.

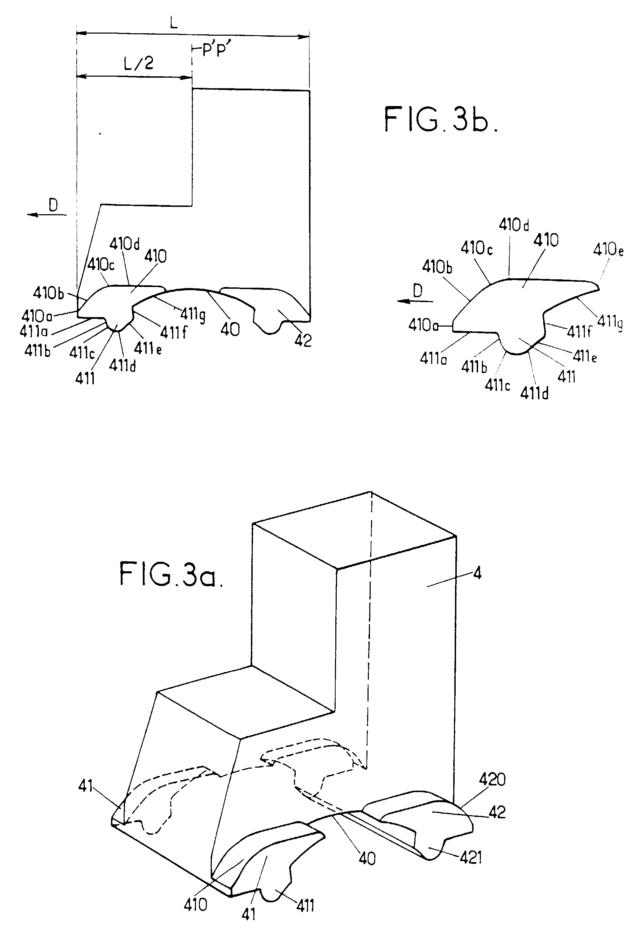

Une description plus détaillée d'un mode de réalisation préférentiel d'un élément support 4 permettant un entraînement en translation/rotation exempt de tout phénomène d'à-coups lors de la transition de l'entraînement en translation à l'entraînement en rotation, sera maintenant décrit en liaison avec les figures 3a et 3b.

Dans le mode de réalisation précédent de la figure 1b, les tenons 41 sont engagés à la fois dans les rainures de guidage et dans les redans de la courroie crantée.

Afin d'éviter tout risque de déstabilisation des éléments supports 4i lors du passage de l'entraînement en translation à l'entraînement en rotation ou réciproquement, la fonction des tenons et des dents peut être réalisée, ainsi que représenté en figures 3a et 3b, de manière séparée, chaque tenon 410 et chaque dent 411 présentant un profil adapté. On comprend bien sûr qu'il en est de même pour les tenons 420 et les dents 421, lesquels présentent un profil semblable symétrique du profil des tenons 410 et 411 par rapport au plan médian transversal noté P'P' de l'élément support ou de la base de celui-ci.

D'une manière générale on décrira uniquement le profil adapté pour un tenon 410 et la dent 411 qui est associée à celui-ci.

Ainsi qu'on l'a représenté, en particulier sur la figure 3b, chaque tenon 410 présente avantageusement successivement, dans le sens de défilement du tenon pour un observateur d'un déplacement dans le sens D représenté par la flèche sur la figure 3b, de chaque élément support 4 ou par rapport à la rainure de guidage de ce déplacement, un bord d'attaque formé successivement par une face plane notée 410a, une face convexe notée 410b, une face convexe de transition notée 410c, et une face plane notée 410d formant bord de fuite du tenon 410 dans la rainure de guidage.

En outre, le profil de chaque dent 411 présente successivement dans le même sens de défilement de celle-ci une face plane 411a de liaison au profil du tenon 410, une face plane 411b d'attaque inclinée par rapport à la face plane de liaison 411a. Ainsi qu'il sera décrit ultérieurement dans la description, l'angle d'inclinaison de la face plane inclinée 411b, correspond à l'angle d'inclinaison de la face d'appui des crans de la courroie crantée, cette face d'appui étant notée SA sur la figure 1b.

La face plane d'attaque inclinée 411b est alors suivie d'une surface cylindrique convexe 411c présentant un rayon de courbure déterminée puis d'une première surface plane 411d parallèle à la surface de liaison 411a. D'une manière générale on indique que la surface cylindrique convexe 411c est tangente à la surface inclinée 411b et à la première surface plane parallèle 411d. La surface plane 411d est alors suivie d'une première surface cylindrique concave notée 411e dont le profil présente un point d'inflexion, ce qui permet d'assurer le raccordement à la première surface plane 411d. Enfin, une deuxième surface plane 411f est prévue dont la dimension dans la direction du profil correspond à celle de chaque cran de la courroie crantée, c'est-à-dire de la surface d'appui SA de celle-ci lorsque la courroie crantée est entraînée en rotation par la poulie 32 ou 33. La deuxième surface plane 411f est ensuite suivie d'une deuxième surface cylindrique concave 411g permettant d'assurer le raccordement au bord de fuite du tenon 410 par un plan coupé noté 410e.

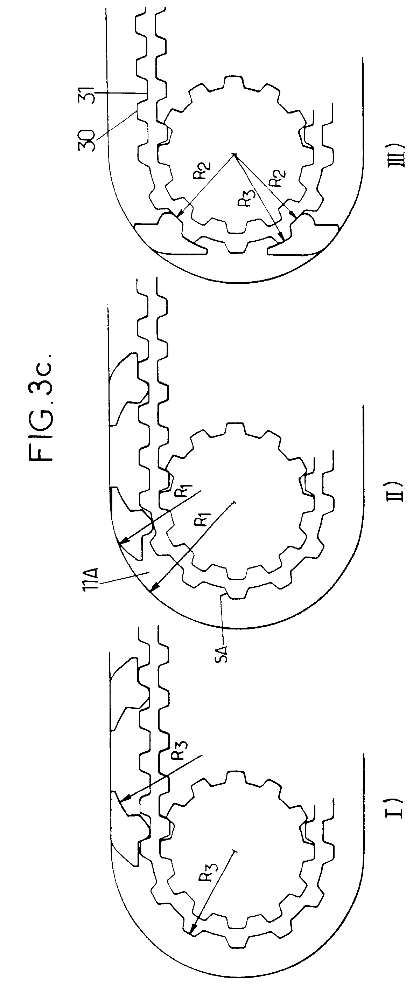

Différents éléments de dimensionnement de chaque élément support 4 et en particulier des tenon 410 et dent 411 seront donnés en liaison avec les figures 3b et 3c.

D'une première part, on indique que la dimension longitudinale L de chaque élément support, ou à tout le moins l'écartement correspondant L des faces planes 410a, respectivement 420a des tenons 410 et 420, est déterminée par le pas des crans de la courroie crantée 3. Cette dimension peut correspondre à un nombre entier de demi-pas de la courroie crantée.

On indique en outre que le rayon de courbure de la face convexe 410b formant bord d'attaque, a une valeur sensiblement égale à celle, notée R1, au point II de la figure 3c du rayon de courbure de la face externe de la rainure de guidage 11A ou 11B.

On indique également que le rayon de courbure de la première face cylindrique concave 411e du profil de chaque dent 411 a une valeur R2, ainsi que représentée au point III de la figure 3c, sensiblement égale à celle d'un redan 31 de la courroie crantée 3 lorsque celle-ci est en position d'entraînement en rotation par une des poulies 32 ou 33.

On indique enfin que le rayon de courbure de la deuxième face cylindrique concave 411g du profil de chaque dent a une valeur sensiblement égale à celle, notée R3, d'un cran 30 de la courroie crantée 3 lorsque celle-ci est en position d'entraînement en rotation ainsi que représenté au point I et III de la figure 3c. On indique que l'ensemble des mesures ci-après permet un maintien en appui constant des dents respectivement du bord d'attaque de chaque tenon sur un cran et un redan de la courroie crantée 3 ainsi que sur le bord externe de la rainure de guidage, quel que soit le mouvement d'entraînement en rotation et/ou en translation de la courroie crantée et de l'élément support 4 entraîné par celle-ci. La figure 3c illustre en outre la cinématique de la transition du mouvement d'entraînement de translation au mouvement d'entraînement en rotation de chaque élément support 4 et de la modification des appuis des tenons et des dents correspondants dans le mode de réalisation des figures 3a et 3b de ces derniers.

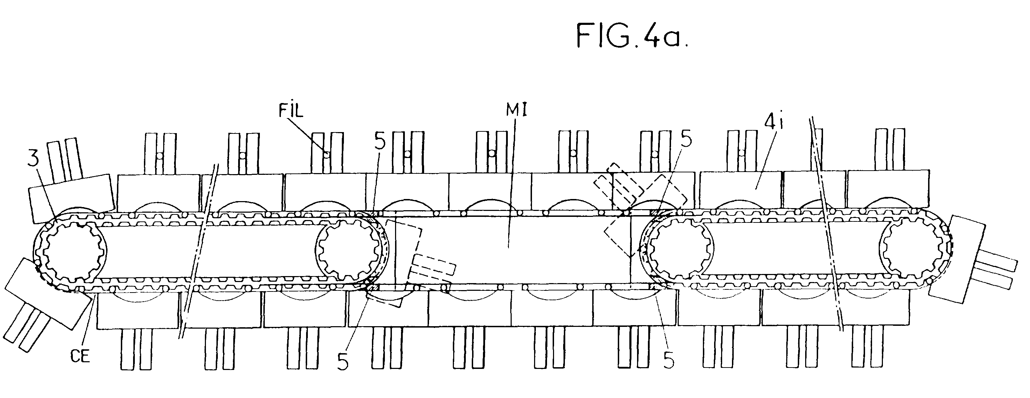

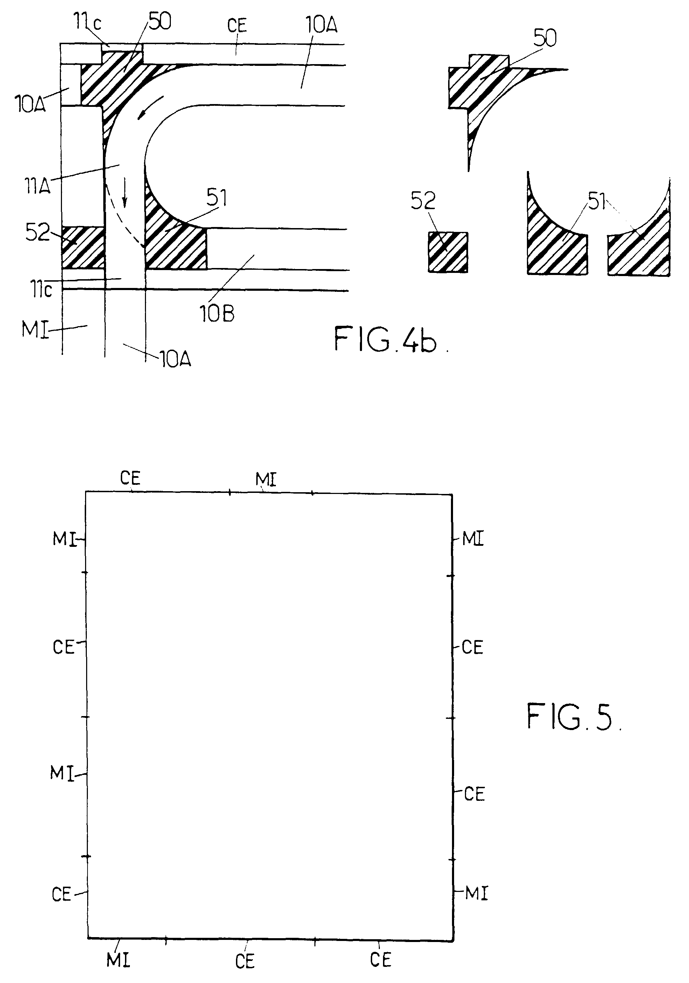

Différentes variantes de réalisation du système de convoyage, objet de la présente invention, seront maintenant données en liaison avec les figure 4a et 4b.

Sur la figure 4a, on a représenté un système de convoyage conforme à l'objet de la présente invention dans le mode de réalisation de la figure 2b.

En outre, ainsi qu'on pourra le constater sur la figure 4a précitée, l'extrémité de chaque convoyeur élémentaire CE, normalement munie de deux rainures de guidage rectilignes parallèles ouvertes à leur extrémité et d'une rainure de guidage circulaire, est en outre équipé de cales d'aiguillage 5 montées au voisinage de la jonction entre chaque rainure de guidage rectiligne et circulaire. Les cales 5 d'aiguillage présentent un profil complémentaire au profil des rainures de guidage rectiligne respectivement circulaires. Elles sont montées à coulissement par exemple entre deux positions de façon à permettre dans une première position la continuité du raccordement entre rainure de guidage circulaire et rectiligne, l'extrémité ouverte de la rainure rectiligne précitée étant fermée, respectivement, dans une deuxième position, la continuité du raccordement entre rainure de guidage rectiligne et l'extrémité ouverte de cette dernière, la rainure de guidage circulaire correspondante étant fermée. Sur la figure 4a les deux positions sont représentées pour chaque cale de guidage en hachures denses et respectivement espacées. On comprend bien sûr que le montage à coulissement des cales de guidage 5 peut être réalisé de manière classique, laquelle pour cette raison ne sera pas décrite, ou que, dans un mode de réalisation plus simple, les cales de guidage de forme adaptée à l'intersection des différentes rainures au niveau de la jonction de celle-ci peuvent être insérées à force dans ces dernières, afin de reconstituer le profil d'aiguillage souhaité. On indique, à titre d'exemple, que les cales de guidage peuvent être réalisées en un matériau autolubrifiant tel que le polytétrafluoréthylène précédemment mentionné pour la réalisation de la base de chaque élément support 4i.

En outre, ainsi qu'on l'a représenté en figure 4b, chaque rainure de guidage circulaire, 11a par exemple, peut être complétée à sa périphérie et au sommet de celle-ci par au moins une rainure de guidage d'aiguillage rectiligne oblique formant rainure de dérivation, notée llc, par rapport aux rainures de guidage rectilignes 10a et 10b.

Dans le mode de réalisation de la figure 4b, on note que les rainures de guidage d'aiguillage rectilignes obliques sont en fait représentées dans un cas particulier non limitatif où celles-ci sont en fait perpendiculaires aux rainures de guidage rectilignes 10a et 10b. On indique que cette représentation n'est pas limitative, les modes de réalisation courants pouvant se limiter au cas où les rainures de guidage circulaires sont complétées par des rainures d'aiguillage rectilignes perpendiculaires aux rainures de guidage rectilignes.

On comprend alors, ainsi que représenté en figure 4b, que l'aiguillage correspondant peut être configuré au moyen de cales d'aiguillage 50, 51, 52 conformées à cet effet. Les cales d'aiguillage précitées peuvent alors être constituées en jeu de cales d'aiguillage permettant une configuration de chaque convoyeur élémentaire CE en fonction de l'utilisation souhaitée de ces derniers. Ainsi, sur la figure 4b, l'insertion à force des cales 50, 51 et 52 permet d'effecteur un aiguillage par rotation à 90°, en vue d'une dérivation vers un module d'interfaçage MI dont la rainure de guidage 10a est placée en prolongement d'une rainure d'aiguillage rectiligne 11c du convoyeur élémentaire CE correspondant.

Il est ainsi possible, ainsi que représenté en figure 5, de réaliser un système de convoyage comprenant une pluralité de convoyeurs élémentaires CE et de modules d'interfaçage MI, l'ensemble de ces éléments étant alors configuré selon une structure polygonale totalement paramétrable et configurable en fonction des besoins réels de l'utilisateur. La configuration précitée est alors réalisée dans un plan sensiblement vertical par exemple, ce qui permet de réduire d'autant l'encombrement au sol d'une chaîne constituée par plusieurs postes de travail répartis sur l'ensemble du système de convoyage ainsi formé.

On a ainsi décrit un système de convoyage en translation/rotation d'un élément support particulièrement performant dans la mesure où celui-ci constitue un système de guidage et d'entraînement d'un ensemble d'éléments supports à guider et déplacer, dans lequel ces éléments supports ne sont pas définitivement solidaires du système d'entraînement, conformément aux dispositifs ou systèmes de l'art antérieur, ce qui permet, grâce à la possibilité de modification temporaire et locale de la forme du guidage, de désolidariser chaque élément support du système d'entraînement.

## Revendications

1. Système de convoyage en translation/rotation d'un élément support, comportant au moins un convoyeur élémentaire (CE) formé d'une part par deux flasques (1, 2) en vis-à-vis, chaque flasque étant muni de rainures de guidage en vis-à-vis rectilignes (10) et/ou circulaires (11) et par une courroie crantée (3) se déplaçant en translation et/ou en rotation, et, d'autre part, par un ou plusieurs éléments supports (4) dont la base comporte au moins deux tenons (41) engagés dans les rainures de guidage, caractérisé en ce que la courroie crantée (3) est au voisinage desdites rainures de guidage et en ce que les tenons (41) sont engagés dans les crans de la courroie crantée, de manière à ce que les tenons soient guidés entre un bord externe de la rainure et la courroie crantée, afin d'assurer, d'une part, l'entraînement, et, d'autre part, le guidage en translation/rotation du ou desdits éléments supports.

2. Système selon la revendication 1, caractérisé en ce que chaque flasque (1, 2) comporte au moins deux rainures rectilignes parallèles (10A, 10B) reliées entre elles à leur extrémité par une rainure circulaire (11A, 11B), l'ensemble desdites rainures rectilignes et circulaires formant une rainure de guidage unique en circuit fermé.

3. Système selon l'une des revendications 1 ou 2, caractérisé en ce que la base de chaque élément support (4i) comporte en outre des dents, chaque tenon (41) et chaque dent (411) présentant un profil adapté, le profil de chaque tenon (41) présentant, successivement dans le sens de défilement de celui-ci par rapport à la rainure de guidage :
- un bord d'attaque formé successivement par une face plane (410a), une face convexe (410b), une face convexe de transition (410c), une face plane (410d) formant bord de fuite du tenon dans la rainure de guidage, le profil de chaque dent (411) présentant successivement dans le sens de défilement de celle-ci,
- une face plane de liaison (411a) au profil dudit tenon, une face plane d'attaque (411b) inclinée par rapport à ladite face plane de liaison (411a), l'angle d'inclinaison correspondant à l'angle d'inclinaison de la face d'appui des crans de ladite courroie crantée, une surface cylindrique convexe (411c) de rayon de courbure déterminé, une première surface plane (411d) parallèle à ladite surface de liaison (411a), ladite surface cylindrique convexe (411c) étant tangente à la surface d'attaque inclinée (411b) et à la surface plane parallèle (411d), une première surface cylindrique concave (411e) dont le profil présente un point d'inflexion permettant le raccordement à ladite première surface plane (411d), une deuxième surface plane (411f) dont la dimension dans la direction du profil correspond à celle de chaque cran de la courroie crantée dans le virage, une deuxième surface cylindrique concave (411g) permettant le raccordement au bord de fuite (410d) par un plan coupé.

4. Système selon la revendication 3, caractérisé en ce que
- le rayon de courbure de la face convexe (410b) formant bord d'attaque a une valeur sensiblement égale à celle du rayon de courbure de la face externe de la rainure circulaire de guidage (10, 11),
- le rayon de courbure de la première face cylindrique concave (411e) du profil de chaque dent a une valeur sensiblement égale à celle d'un redan (31) de la courroie crantée (3), lorsque celle-ci est en position d'entraînement en rotation,
- le rayon de courbure de la deuxième face cylindrique concave (411g) du profil de chaque dent a une valeur sensiblement égale à celle d'un cran (30) de la courroie crantée (3) lorsque celle-ci est en position d'entraînement en rotation, ce qui permet un maintien en appui constant des dents (411) respectivement du bord d'attaque de chaque tenon (41) sur un cran (30) et un redan (31) de la courroie crantée (3) respectivement sur le bord externe de la rainure de guidage (10, 11) quel que soit le mouvement d'entraînement en rotation et/ou en translation par la courroie crantée (3).

5. Système selon l'une des revendications précédentes, caractérisé en ce que, pour une courroie crantée (3) entraînée en translation/rotation au moyen d'au moins une poulie motrice (20), chaque élément support (4), lors de la transition translation/rotation d'entraînement par ladite courroie (3) présente un centre instantané de rotation passant progressivement d'un point situé à l'infini à un point coïncidant avec le centre de guidage circulaire.

6. Système selon la revendication 1, caractérisé en ce que chaque flasque (1, 2) est formé par une plaque métallique dans l'épaisseur de laquelle la ou les rainures de guidage (10, 11) sont formées, la base desdits éléments supports (4) étant formée en un matériau plastique autolubrifiant.

7. Système selon la revendication 6, caractérisé en ce qu'un convoyeur élémentaire (CE) comporte au moins :
- deux flasques (1, 2) en vis-à-vis munis de deux rainures de guidage rectilignes parallèles (10A, 10B) reliées à leur extrémité par une rainure de guidage circulaire (11A), ces rainures de guidage parallèles (10A, 10B) étant ouvertes à leur extrémité,
- des cales d'aiguillage (50,51) montées au voisinage de la jonction entre chaque rainure de guidage rectiligne (10A, 10B) et circulaire (11A), les cales de jonction présentant un profil complémentaire au profil des rainures de guidage rectilignes respectivement circulaires, et étant montées à coulissement entre deux positions de façon à permettre dans une première position la continuité du raccordement entre rainure de guidage circulaire (11A) et rectiligne (10A, 10B), l'extrémité ouverte de ladite rainure rectiligne étant fermée, respectivement, dans une deuxième position la continuité du raccordement entre rainure de guidage rectiligne (10A, 10B) et l'extrémité ouverte de cette dernière, la rainure de guidage circulaire (11A) correspondante étant fermée.

8. Système selon l'une des revendications 1 à 7, caractérisé en ce que chaque rainure de guidage circulaire (llA) est complétée à sa périphérie par au moins une rainure de guidage d'aiguillage rectiligne oblique (11C) par rapport auxdites rainures de guidage rectilignes (10A, 10B).

9. Système selon l'une des revendications 1 à 8, caractérisé en ce qu'il comprend une pluralité de convoyeurs élémentaires (CE) alignés.

## Patentansprüche

1. Translations/Rotations-Fördersystem für ein Tragelement, umfassend mindestens einen elementaren Förderer (CE), der gebildet wird von einerseits zwei einander gegenüberliegenden Flanschen (1, 2), wobei jeder Flansch mit einander gegenüberliegenden, geradlinigen (10) und/oder kreisförmigen (11) Führungsnuten versehen ist, und von einem gezahnten Riemen (3), der sich bei Translation und/oder Rotation fortbewegt, und andererseits einem oder mehreren Tragelementen (4), deren Basis mindestens zwei Zapfen (41) umfaßt, die in Führungsnuten eingreifen, dadurch gekennzeichnet, daß der gezahnte Riemen (3) bei den Führungsnuten angeordnet ist, und daß die Zapfen (41) in die Vorsprünge des gezahnten Riemens so eingreifen, daß sie zwischen einem äußeren Rand der Nut und dem gezahnten Riemen geführt werden, um einerseits den Antrieb, und andererseits die Führung bei Translation/Rotation des oder der Tragelemente sicherzustellen.

2. Fördersystem gemäß Anspruch 1, dadurch gekennzeichnet, daß jeder Flansch (1, 2) mindestens zwei parallele, geradlinige Nuten (10A, 10B) umfaßt, die an ihrem Ende durch eine kreisförmige Nut (11A, 11B) miteinander verbunden sind, wobei die Gesamtheit der geradlinigen und kreisförmigen Nuten eine einzige Führungsnut in Form einer geschlossenen Bahn bildet.

3. Fördersystem gemäß irgendeinem der Ansprüche 1 oder 2, dadurch gekennzeichnet, daß die Basis jedes Tragelements (4i) außerdem Zähne umfaßt, wobei jeder Zapfen (41) und jeder Zahn (411) ein angepaßtes Profil aufweist, wobei das Profil jedes Zapfens (41) in aufeinanderfolgender Weise in der Laufrichtung des Zapfens bezüglich der Führungsnut aufweist:
- eine vordere Kante, die in aufeinanderfolgender Weise von einer ebenen Fläche (410a), einer konvexen Fläche (410b), und einer konvexen Übergangsfläche (410c) gebildet wird, wobei eine ebene Fläche (410d) die hintere Kante des Zapfens in der Führungsnut bildet, und wobei das Profil jedes Zahns (411) in aufeinanderfolgender Weise in der Laufrichtung dieses Zahns aufweist:
- eine ebene Verbindungsfläche (411a), die mit dem Profil des Zapfens verbindet, eine vordere ebene Fläche (411b), die bezüglich der ebenen Verbindungsfläche (411a) geneigt ist, wobei der Neigungswinkel dem Neigungswinkel der Auflagefläche der Vorsprünge des gezahnten Riemens entspricht, eine konvexe, zylindrische Fläche (411c) mit einem vorgegebenen Krümmungsradius, eine erste ebene Fläche (411d), die parallel zu der Verbindungsfläche (411a) ist, wobei die konvexe, zylindrische Fläche (411c) in die vordere, geneigte Fläche (411b) und die parallele, ebene Fläche (411d) tangential übergeht, eine erste konkave, zylindrische Fläche (411e), deren Profil einen Wendepunkt aufweist, der die Verbindung mit der ersten ebenen Fläche (411d) ermöglicht, eine zweite ebene Fläche (411f), deren Abmessung in der Richtung des Profils derjenigen jedes Vorsprungs des gezahnten Riemens in der Kurve entspricht, und eine zweite konkave, zylindrische Fläche (411g), die über eine abgeschrägte Fläche die Verbindung mit der hinteren Kante (410d) ermöglicht.

4. Fördersystem gemäß Anspruch 3, dadurch gekennzeichnet, daß
- der Krümmungsradius der konvexen Fläche (410b), die die vordere Kante bildet, einen Wert hat, der im wesentlichen gleich dem Wert des Krümmungsradius der äußeren Fläche der kreisförmigen Führungsnut (11) ist,
- der Krümmungsradius der ersten konkaven, zylindrischen Fläche (411e) des Profils jedes Zahns einen Wert hat, der im wesentlichen gleich dem Wert des Krümmungsradius einer Vertiefung (31) des gezahnten Riemens (3) ist, wenn dieser Riemen in der Rotationsantriebsposition ist,
- der Krümmungsradius der zweiten konkaven, zylindrischen Fläche (411g) des Profils jedes Zahns einen Wert hat, der im wesentlichen gleich dem Wert des Krümmungsradius eines Vorsprungs (30) des gezahnten Riemens (3) ist, wenn dieser Riemen in der Rotationsantriebsposition ist, was eine gleichbleibende Auflage des Zahns (411) bzw. der vorderen Kante jedes Zapfens (41) auf einem Vorsprung (30) und einer Vertiefung (31) des gezahnten Riemens (3), bzw. auf dem äußeren Rand der Führungsnut (10, 11) ermöglicht, unabhängig von der Rotations- und/oder Translations-Antriebsbewegung durch den gezahnten Riemen (3).

5. Fördersystem gemäß irgendeinem der vorhergehenden Ansprüche, dadurch gekennzeichnet, daß bei einem gezahnten Riemen (3), der mittels mindestens einer Antriebsriemenscheibe (20) bei Translation/Rotation angetrieben wird, jedes Tragelement (4) bei dem Translations/Rotations-Übergang des Antriebs durch den Riemen (3) ein momentanes Rotationszentrum aufweist, das in progressiver Weise von einem im Unendlichen gelegenen Punkt nach einem mit dem Zentrum der kreisförmigen Führung zusammenfallenden Punkt übergeht.

6. System gemäß Anspruch 1, dadurch gekennzeichnet, daß jeder Flansch (1, 2) von einer metallischen Platte gebildet wird, in deren Dicke die Führungsnut oder die Führungsnuten (10, 11) gebildet sind, wobei die Basis der Tragelemente (4) aus einem selbstschmierenden plastischen Material gebildet ist.

7. Fördersystem gemäß Anspruch 6, dadurch gekennzeichnet, daß ein elementarer Förderer (CE) mindestens umfaßt:
- zwei einander gegenüberliegende Flansche (1, 2), die mit zwei parallelen, geradlinigen Führungsnuten (10A, 10B) versehen sind, die an ihrem Ende durch eine kreisförmige Führungsnut (11A) miteinander verbunden sind, wobei diese parallelen Führungsnuten (10A, 10B) an ihrem Ende offen sind,
- Weichenkeile (50, 51), die bei der Verbindungstelle zwischen jeder geradlinigen (10A, 10B) und kreisförmigen (11A) Führungsnut angebracht sind, wobei die Verbindungsstellen-Keile ein zu dem Profil der geradlinigen bzw. kreisförmigen Führungsnuten komplementäres Profil haben, und so angebracht sind, daß sie zwischen zwei Positionen verschiebbar sind, wobei in einer ersten Position die Kontinuität der Verbindung zwischen der kreisförmigen (11A) und der geradlinigen (10A, 10B) Führungsnut ermöglicht wird, wobei das offene Ende der geradlinigen Nut verschlossen ist, bzw. in einer zweiten Position die Kontinuität der Verbindung zwischen der geradlinigen Führungsnut (10A, 10B) und dem offenen Ende dieser letzteren ermöglicht wird, wobei die entsprechende kreisförmige Führungsnut (llA) verschlossen ist.

8. Fördersystem gemäß irgendeinem der Ansprüche 1 bis 7, dadurch gekennzeichnet, daß jede kreisförmige Führungsnut (11A) bei ihrem Umfang durch mindestens eine geradlinige Weichen-Führungsnut (11C), die schräg bezüglich der geradlinigen Führungsnuten (10A, 10B) ist, vervollständigt wird.

9. Fördersystem gemäß irgendeinem der Ansprüche 1 bis 8, dadurch gekennzeichnet, daß es eine Vielzahl von in einer Linie angeordneten, elementaren Förderern (CE) aufweist.

## Claims

1. Translational/rotational support member conveying system, including at least one elementary conveyor (CE) formed on the one hand by two facing side plates (1, 2), each side plate being provided with facing rectilinear (10) and/or circular (11) guiding grooves and by a notched belt (3) moving translationally and/or rotationally, and, on the other hand, by one or more support members (4) whose base includes at least two tenons (41) engaged in the guiding grooves, characterized in that the notched belt (3) is in the vicinity of the said guiding grooves and in that the tenons (41) are engaged in the notches of the notched belt so that the tenons are guided between an outer boundary of the groove and the notched belt in order to ensure, on the one hand, the translational/rotational driving, and, on the other hand, the translational/rotational guiding of the said support member(s).

2. System according to Claim 1, characterized in that each side plate (1, 2) includes at least two parallel rectilinear grooves (10A, 10B) connected to one another at their end by a circular groove (11A, 11B), the set of the said rectilinear and circular grooves forming a single closed-circuit guiding groove.

3. System according to one of Claims 1 or 2, characterized in that the base of each support member (4i) further includes teeth, each tenon (41) and each tooth (411) having an adapted profile, the profile of each tenon (41) having, successively in the direction of travel of the latter with respect to the guiding groove:
- a leading edge formed successively by a plane face (410a), a convex face (410b), a convex transition face (410c), a plane face (410d) forming the trailing edge of the tenon in the guiding groove, the profile of each tooth (411) having successively in the direction of travel of the latter:
- a plane face (411a) for joining to the profile of the said tenon, a plane leading face (411b) inclined with respect to the said plane joining face (411a), the angle of inclination corresponding to the angle of inclination of the bearing face of the notches of the said notched belt, a convex cylindrical surface (411c) of given radius of curvature, a first plane surface (411d) parallel to the said joining surface (411a), the said convex cylindrical surface (411c) being tangent to the inclined leading surface (411b) and to the parallel plane surface (411d), a first concave cylindrical surface (411e) whose profile has a point of inflection permitting connection to the said first plane surface (411d), a second plane surface (411f) whose dimension in the direction of the profile corresponds to that of each notch of the notched belt in the turn, a second concave cylindrical surface (411g) permitting connection to the trailing edge (410d) via a cut-off plane.

4. System according to Claim 3, characterized in that
- the radius of curvature of the convex face (410b) forming the leading edge has a value substantially equal to that of the radius of curvature of the outer face of the circular guiding groove (10, 11),
- the radius of curvature of the first concave cylindrical face (411e) of the profile of each tooth has a value substantially equal to that of an indentation (31) of the notched belt (3) when the latter is in the rotational driving position,
- the radius of curvature of the second concave cylindrical face (411g) of the profile of each tooth has a value substantially equal to that of a projection (30) of the notched belt (3) when the latter is in the rotational driving position, which permits the teeth (411) and respectively the leading edge of each tenon (41) to be kept constantly bearing on a projection (30) and an indentation (31) of the notched belt (3) and respectively on the outer boundary of the guiding groove (10, 11) whatever the rotational and/or translational driving movement by the notched belt (3).

5. System according to one of the preceding claims, characterized in that, for a notched belt (3) driven translationally/rotationally by means of at least one driving pulley (20), each support member (4), upon the translation/rotation transition of the driving by the said belt (3) has an instantaneous centre of rotation passing progressively from a point situated at infinity to a point coinciding with the circular guiding centre.

6. System according to Claim 1, characterized in that each side plate (1, 2) is formed by a metallic plate in the thickness of which the guiding groove(s) (10, 11) are formed, the base of the said support members (4) being formed of a self-lubricating plastic material.

7. System according to Claim 6, characterized in that an elementary conveyor (CE) includes at least:
- two facing side plates (1, 2) provided with two parallel rectilinear guiding grooves (10A, 10B) connected at their end by a circular guiding groove (11A), these parallel guiding grooves (10A, 10B) being open at their end,
- switching blocks (50, 51) mounted in the vicinity of the junction between each rectilinear (10A, 10B) and circular (11A) guiding groove, the junction blocks having a profile complementary to the profile of the rectilinear and circular guiding grooves respectively, and being mounted to slide between two positions so as to permit in a first position the continuity of the connection between circular (11A) and rectilinear (10A, 10B) guiding groove, the open end of the said rectilinear groove being closed, and respectively in a second position the continuity of the connection between rectilinear guiding groove (10A, 10B) and the open end of the latter, the corresponding circular guiding groove (11A) being closed.

8. System according to one of Claims 1 to 7, characterized in that each circular guiding groove (11A) is supplemented at its periphery by at least one rectilinear switching guiding groove (11C) which is oblique with respect to the said rectilinear guiding grooves (10A, 10B).

9. System according to one of Claims 1 to 8, characterized in that it comprises a plurality of aligned elementary conveyors (CE).
